# EUROPEAN PATENT SPECIFICATION

(11) **EP 0 264 206 B1**
(45) Date of publication and mention of the grant of the patent: **24.02.1993**
(21) Application number: 87308707.6
(22) Date of filing: 01.10.1987
(51) Int. Cl.: F16C 3/02

(54) **Tranmission pipe**
Antriebswelle
Arbre de transmission

(30) Priority: 13.10.1986 JP 241393/86
(43) Date of publication of application: 20.04.1988
(73) Proprietor: Tube Forming Co.,Ltd., Yokohama-shi (JP); MITSUI & CO., LTD., Chiyoda-ku Tokyo 100 (JP)
(72) Inventor: Nakamura, Masanobu, Kamakurashi Kanagawa-ken (JP)
(74) Representative: Carpenter, David

(56) References cited:
- FR-A- 887 124
- FR-A- 1 581 657
- FR-A- 2 146 730
- JP-A- 6 038 565
- US-A- 2 848 882
- US-A- 3 642 311

## Description

This invention relates to a transmission shaft, and more particularly to a transmission shaft of tubular form suitable for a drive shaft of an automobile.

As a prior art drive shaft which transmits rotation from an engine to an axle of driving wheels of an automobile, there has been known a drive shaft using a solid shaft member. The solid shaft, however, is detrimental in that it inevitably is heavy and expensive.

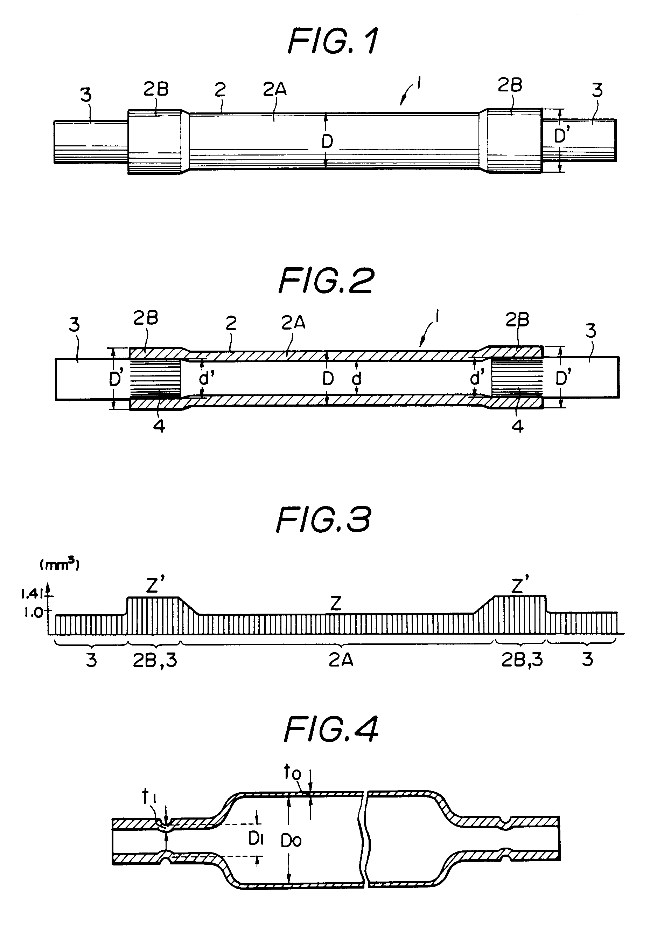

As a solution to this problem, there has been proposed a drive shaft shown in Figure 4 comprising a pipe member 10 having a smaller diameter at both ends thereof and a larger diameter at the middle portion therebetween in a manner that the section moduli at the above two different portions have the following relation in order to avoid fractures caused by stress concentration on the smaller diameter portions 13 and to distribute the stress uniformly over the whole of the pipe member. (See JP-B-60 - 38565)
0.8 Z₁ < Z₀ < 2.2 Z₁
wherein
- Z₀:: section modulus at the larger diameter portion
- Z₁:: section modulus at the smaller diameter portions

The transmission shaft mentioned above is processed to have a greater thickness t₁ at the portions 13 with the outer diameter D₁ than the thickness t₀ at the portion 12 with the outer diameter D₀.

Although the above-mentioned transmission shaft can avoid local concentration of stress, it is necessary to thicken the pipe member at both end portions by drawing in the moulding process. As the moulding of a transmission shaft involves a complex operation and needs a large sized processing machine, the cost becomes inconveniently high. An attempt was made to solve the problem by inserting solid shaft members into both ends of the pipe member and caulking them (tightening by external pressure) so as to facilitate the shaft moulding process. However, it was found that if shaft members were inserted and caulked at both ends of a pipe, then stress would become concentrated at the caulked portions sufficiently to destroy them, and the portions could not have the required strength.

FR-A-1581657 discloses a transmission shaft formed from a pipe having reduced diameter end regions within which solid shaft portions are received. A similar configuration is also disclosed in FR-A-2146730 which also mentions that the end external diameters can exceed the central external diameter. However, FR-A-2146730 does not suggest that the transmission shaft should be connected to solid shaft members and is silent regarding section modulus.

This invention aims at providing a transmission shaft which comprises a pipe member and shaft members which are caulked to both ends of the pipe member so as to thereby facilitate the moulding of the pipe member as well as to avoid stress concentration on caulked portions.

In accordance with the present invention there is provided a transmission shaft comprising, a pipe member having opposite end portions and a middle portion, the end portions having a section modulus $\text{Z' = π · (D'⁴ - d'⁴)/32D'}$ 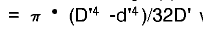 where D' is the outer diameter of the end portions and d' is the inner diameter of the end portions, and the middle portion having a section modulus $\text{Z = π · (D⁴ - d⁴)/32D}$ where D and d are the outer and inner diameters of the middle portion, respective solid shaft members received in the end portions of the pipe member, the end portions being caulked around their respective solid shaft members by external pressure around their circumference, and characterized in that the end portions are of larger diameter than the middle portion, and the internal and external diameters of the end and middle portions of the pipe member are such that the section modulus Z' of the end portions is 1.05 to 1.80 times as large as the section modulus Z of the middle portion of the pipe member.

Preferably the outer surfaces of said solid shaft members within their respective pipe member end portions are grooved to enhance the grip between the end portions and the shaft members.

Desirable the grooves are formed by threading.

Alternatively the grooves are formed by knurling.

In the accompanying drawings:-
Figure 1 is a frontal view to show one embodiment of the transmission shaft according to this invention,
Figure 2 is a vertical section thereof,
Figure 3 is an explanatory view to compare the section moduli between respective portions of the shaft shown in Figure 1, and
Figure 4 shows a vertical section at the center of a prior art shaft.

The present invention will now be described by referring to embodiments shown in attached drawings.

As shown in the frontal view in Figure 1 and the vertical section in Figure 2, the outer diameter D' at both ends of a pipe member 2 which is a component of a transmission shaft 1 is formed to be slightly larger than the outer diameter D at the middle portion 2A. Solid shaft members 3, 3 are inserted into the larger diameter portions 2B, 2B to the full depth of said portions 2B, 2B. The outer circumferences of the large diameter portions 2B, 2B are processed and caulked by a suitable pressing means to connect these parts.

In order to secure the effect of caulking and to increase the resistance against rotational movement, a projection/recess portion 4 with a large number of grooves may be formed on a shaft member 3 in the outer peripheral surface as shown in Figure 2 so that the projection/recess portion 4 is forced into the pipe member at the caulking process. Besides providing grooves, the projection/recess portion 4 may be formed by the process of knurling or threading.

The pipe member dimensions are so chosen that the section modulus at the above larger diameter end portions 2B, 2B is 1.05 - 1.80 times larger than the section modulus at the middle portion 2A of the pipe member 2. The section modulus Z at the middle portion 2A of the pipe member 2 and the section modulus at the larger diameter portion 2B, 2B at the ends of the pipe member 2 can be expressed by the following equations: 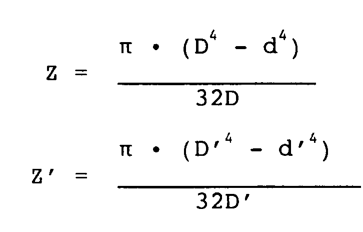
wherein
- D :: outer diameter at the middle portion 2A
- D' :: outer diameter at the larger diameter portions 2B
- d :: inner diameter at the middle portion 2A
- d' :: inner diameter at the larger diameter portions 2B

If it is assumed that D is 30 mm, d 25 mm, D' 35 mm, and d' 30 mm in a transmission shaft, the section moduli Z and Z' can be calculated by the following equations.

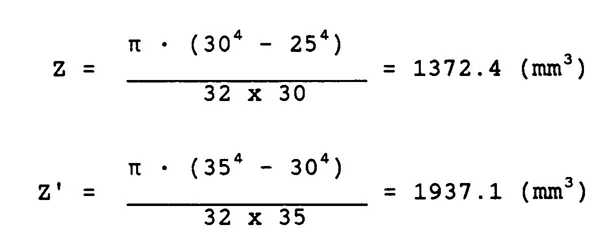

The ratio of Z to Z' will be
Z : Z' = 1372.4 : 1937.1 = 1 : 1.41,
and the relation below holds.
1.05 Z < Z' < 1.80 Z
In the transmission shaft constructed in the manner above, the section moduli are substantially the same at the middle portion 2A of the pipe member 2 and the shaft member 3, 3, and larger at the caulked portions 2B. The transmission shaft thus constructed has therefore a predetermined strength without concentration of the stress at the larger diameter end portions 2B, 2B of the pipe member 2 which are caulked with the ends of shaft members 3, 3 and the fracture at said caulked portions can be avoided.

Though the transmission shaft described above uses pipe members, it can be manufactured by simple processing because it does not need a drawing operation to vary the thickness of the pipe. As the said shaft members are inserted into the end portions of the pipe member, the strength in attachment with other members is sufficiently high, and the structure of the attachment can be simple.

As the connection of the pipe member with shaft end portions is made by caulking and the shaft members are inserted into the larger diameter portions of the pipe, the section modulus at said caulked portions becomes larger than that at the middle portion of the pipe member. If the middle portion of the pipe retains a predetermined strength, the transmission shaft can have a predetermined strength and the produced transmission shaft therefore can have a sufficiently high strength, though a pipe member is used as a component.

## Claims

1. A transmission shaft comprising a pipe member (2) having opposite end portions (2B) and a middle portion (2A), the end portions (2B) having a section modulus $\text{Z' = π · (D'⁴ - d'⁴)/32D'}$ where D' is the outer diameter of the end portions (2B) and d' is the inner diameter of the end portions (2B), and the middle portion having a section modulus $\text{Z = π · (D⁴ - d⁴)/32D}$ where D and d are the outer and inner diameters respectively of the middle portion (2A), respective solid shaft members (3) received in the end portions (2B) of the pipe member (1), the end portions (2A) being caulked around their respective solid shaft members (3) by external pressure around their outer circumference, and characterized in that the end portions (2B) are of larger diameter than the middle portion (2A), and the internal and external diameters of the end and middle portions of the pipe member (2) are such that the section modulus Z' of the end portions (2B) is 1.05 to 1.80 times as large as the section modulus Z of the middle portion (2A) of the pipe member.

2. A transmission shaft as claimed in Claim 1 characterized in that the outer surfaces of said solid shaft members (3) within their respective pipe member end portions (2B) are grooved (4) to enhance the grip between the end portions and the shaft members.

3. A transmission shaft as claimed in Claim 2 characterized in that said grooves (4) are formed by threading.

4. A transmission shaft as claimed in Claim 2 characterized in that said grooves (4) are formed by knurling.

## Patentansprüche

1. Getriebewelle mit einem Rohrelement (2) mit gegenüberliegenden Endabschnitten (2B) und einem mittleren Abschnitt (2A), wobei die Endabschnitte (2B) ein Widerstandsmoment $\text{Z' = π· (D'⁴ - d'⁴)/32 D'}$ 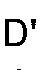 aufweisen, wobei D' der Außendurchmesser der Endabschnitte (2B) und d' der Innendurchmesser der Endabschnitte (2B) ist, und der mittlere Abschnitt ein Widerstandsmoment $\text{Z = π· (D⁴ - d⁴)/32 D}$ besitzt, wobei D und d der Außendurchmesser und der Innendurchmesser des mittleren Abschnittes (2A) ist, und entsprechenden massiven Wellenelementen (3), die in den Endabschnitten (2B) des Rohrelementes (1) angeordnet sind, wobei die Endabschnitte (2A) durch Außendruck um ihren Außenumfang um ihre entsprechenden massiven Wellenelemente (3) dichtgestemmt sind, dadurch gekennzeichnet, daß die Endabschnitte (2B) einen größeren Durchmesser besitzen als der mittlere Abschnitt (2A) und daß der Innendurchmesser und Außendurchmesser der Endabschnitte und des mittleren Abschnittes des Rohrelementes (2) derart ausgewählt sind, daß das Widerstandsmoment Z' der Endabschnitte (2B) 1,05 bis 1,80 mal so groß ist wie das Widerstandsmoment Z des mittleren Abschnittes (2AA) des Rohrelementes.

2. Getriebewelle nach Anspruch 1, dadurch gekennzeichnet, daß die Außenflächen der massiven Wellenelemente (3) in ihren entsprechenden Rohrelementendabschnitten (2B) genutet (4) sind, um den Griff zwischen den Endabschnitten und den Wellenelementen zu verbessern.

3. Getriebewelle nach Anspruch 2, dadurch gekennzeichnet, daß die Nuten (4) durch Gewindeschneiden ausgebildet sind.

4. Getriebewelle nach Anspruch 2, dadurch gekennzeichnet, daß die Nuten (4) durch Rändeln ausgebildet sind.

## Revendications

1. Arbre de transmission comprenant un élément tubulaire (2) comportant des portions terminales opposées (2B) et une portion médiane (2A), les portions terminales (2B) possédant un module de section $\text{Z' = π . (D'⁴ - d'⁴)/32D'}$ où D' représente le diamètre externe des portions terminales (2B) et d' représente le diamètre interne des portions terminales (2B), et la portion médiane possédant un module de section $\text{Z = π . (D⁴ - d⁴)/32D}$ où D et d représentent les diamètres externe et interne respectivement de la portion médiane (2A), des éléments d'arbres pleins respectifs (3) venant se loger dans les portions terminales (2B) de l'élément tubulaire (1), les portions terminales (2B) étant matées autour de leurs éléments d'arbres pleins respectifs (3) à l'intervention d'une pression externe s'exerçant autour de leur circonférence externe, et caractérisé en ce que les portions terminales (2B) ont un diamètre plus grand que celui de la portion médiane (2A), et les diamètres interne et externe des portions terminales et de la portion médiane de l'élément tubulaire (2) sont tels que le module de section Z' des portions terminales (2B) est de 1,05 à 1,80 fois aussi grand que le module de section Z de la portion médiane (2A) de l'élément tubulaire.

2. Arbre de transmission selon la revendication 1, caractérisé en ce que les surfaces externes desdits éléments d'arbres pleins (3) au niveau des portions terminales respectives (2B) d'élément tubulaire sont rainurées (4) pour augmenter le serrage entre les portions terminales et les éléments d'arbres.

3. Arbre de transmission selon la revendication 2, caractérisé en ce que les rainures (4) sont réalisées par filetage.

4. Arbre de transmission selon la revendication 2, caractérisé en ce que les rainures (4) sont réalisées par moletage.
